(19) Europäisches Patentamt

European Patent Office

Office européen des brevets

(11) **EP 0 984 512 A1**

(12) **EUROPÄISCHE PATENTANMELDUNG**

(43) Veröffentlichungstag:
08.03.2000 Patentblatt 2000/10

(51) Int. Cl.⁷: **H01Q 19/19**, G01S 13/86

(21) Anmeldenummer: **99115189.5**

(22) Anmeldetag: **16.08.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **22.08.1998 DE 19838246**

(71) Anmelder: **DaimlerChrysler AG**
**70567 Stuttgart (DE)**

(72) Erfinder:
• **Schindler, Gerhard**
**81369 München (DE)**
• **Härtinger, Erwin**
**82131 Stockdorf (DE)**
• **Leupelt, Uwe**
**82140 Olching (DE)**

(54) **Bispektrales Fenster für einen Reflektor und Reflektroantenne mit diesem bispektralen Fenster**

(57) Es wird ein bispektrales Fenster für einen Reflektor für den Infrarot- und Millimeterwellen-Bereich aus dielektrischem Material mit rotationssymmetrischen Vorder- und Hinterflächen offenbart, wobei die Vorderfläche optimal an die Reflektoroberfläche angepaßt ist und die Hinterfläche in Bezug auf optimale Millimeterwellen-Reflektivität sowie optimale Infrarot-Transmittivität ausgelegt ist. Dieses bispektrale Fenster wird gemäß einem Ausführungsbeispiel in einer Offset-GREGORY-Doppelreflektorantenne verwendet. Durch die Verwendung des bispektralen Fensters wird eine platzsparende Integration von Millimeterwellen- und Infrarotsystemen in einer Antenne ermöglicht, in der zudem eine unerwünschte Beeinträchtigung der Infrarot-Strahlung ausgeschlossen ist, da eine Trennung der Signalwege erfolgt.

**Fig. 1**

EP 0 984 512 A1

**Beschreibung**

Die vorliegende Erfindung bezieht sich auf ein bispektrales Fenster für einen Reflektor sowie auf eine Reflektorantenne mit diesem bispektralen Fenster.

Aus "Multispectral (IR/MMW) Dome For Seeker Application" von G. Forti; W. Menicacci - S.M.A.; A. Novi; G. Simocini; L. Calami - OFF. GALILEO; Florenz, ???(*bitte Veröffentlichungsdatum ergänzen!*), Seiten 157 bis 166, ist eine rotationssymmetrische Cassegrain-Antenne bekannt, wie in Fig. 9 gezeigt, bei der die Infrarot(IR)-aktiven Elemente in das Speisehorn integriert sind. Die Infrarot(IR)-Strahlung und die Millimeterwellen(RF)-Strahlung durchläuft somit das Reflektorsystem in gleicher Weise. Dabei können in bestimmten Anwendungsfällen für die Infrarot(IR)-Signale unerwünschte Nebenwirkungen auftreten, die eine direkt abstrahlende Apertur erforderlich machen. Bei Koinzidenz der Strahlrichtungen ist dies bei diesem System nicht möglich, weil sowohl der Erreger als auch der Subreflektor sich im Strahlengang befinden würden.

Weiterhin besteht bei herkömmlichen Antennen das Problem einer platzsparenden Integration eines Millimeterwellensensorsystems (RF) und eines Infrarotsystems (IR) in beispielsweise eine Offset-Doppelreflektorantenne, die die folgenden Eigenschaften aufweisen soll:

- direkt und ungestört abstrahlende Infrarot(IR)-Apertur
- möglichst geringe Degradation des Millimeterwellen(RF)-Signalwegs
- Koinzidenz der Strahlachsen beider Systeme.

Daher ist es Aufgabe der vorliegenden Erfindung, ein bispektrales Fenster für einen Reflektor bzw. eine Reflektorantenne mit diesem bispektralen Fenster zu schaffen, die Infrarot(IR)- ebenso wie Millimeterwellen(RF)-Strahlung ohne unerwünschte Nebenwirkungen für die Infrarot(IR)-Strahlung empfangen können und die nur geringen Raum für das Millimeterwellensensorsystem sowie das Infrarotsystem benötigen.

Erfindungsgemäß wird diese Aufgabe durch ein bispektrales Fenster für einen Reflektor gemäß Patentanspruch 1 bzw. eine Reflektorantenne mit bispektralem Fenster gemäß Patentanspruch 3 gelöst. Weitere vorteilhafte Ausgestaltungen der Erfindung sind in den Unteransprüchen angegeben.

Erfindungsgemäß wird der zentrale Teil eines (Haupt)Reflektors durch ein bispektrales Fenster ersetzt, das frequenzselektiv eine Trennung der beiden Signalwege von Infrarot(IR)- und Millimeterwellen(RF)-Strahlung ermöglicht, so daß unerwünschte Nebenwirkungen auf die Infrarot(IR)-Strahlung verhindert werden können und eine platzsparende Integration möglich ist.

Weitere Aufgaben, Merkmale und Vorteile der Erfindung werden aus der nachfolgenden detaillierten Beschreibung eines bevorzugten Ausführungsbeispiels der Erfindung in Verbindung mit der Zeichnung offensichtlich.

Es zeigen:

Fig. 1 eine schematische Darstellung einer erfindungsgemäßen Offset-GREGORY-Antenne,

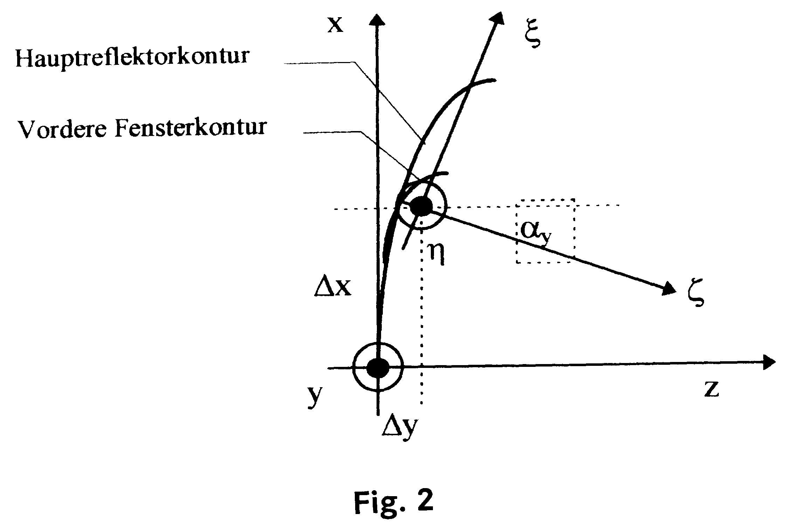

Fig. 2 ein Koordinatensystem und Transformationsparameter zur erfindungsgemäßen Bestimmung der Hauptreflektor- sowie der vorderen Fensterkontur,

Fig. 3 ein Koordinatensystem zur Veranschaulichung der Festlegung der hinteren Fensterkontur,

Fig. 4 die erfindungsgemäße Reflektivität über die Infrarot-Fenster-Apertur,

Fig. 5 eine schematische Darstellung einer erfindungsgemäßen Infrarot(IR)-Fenster-Reflektion,

Fig.en 6a und 6b Hauptschnitte der Strahlungscharakteristik für einen erfindungsgemäßen Reflektor mit bispektralem Fenster,

Fig. 7 eine Gesamtansicht einer Doppelreflektorantenne mit bispektralem Fenster im Hauptreflektor auf einem Meßdrehstand,

Fig.en 8a und 8b Hauptschnitte der Strahlungscharakteristik für einen herkömmlichen Vollreflektor und

Fig. 9 eine herkömmliche rotationssymmetrische Cassegrain-Antenne

Im folgenden wird unter Bezugnahme auf die Zeichnung das erfindungsgemäße bispektrale Fenster bzw. ein Reflektor mit diesem bispektralen Fenster anhand eines bevorzugten Ausführungsbeispiels in Gestalt einer Offset-GREGORY-Antenne erläutert.

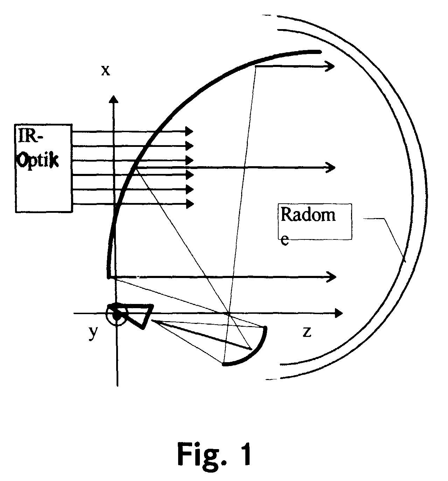

Zunächst wird die Offset-GREGORY-Antenne, wobei auch eine CASSEGRAIN-Ausführung möglich ist, die allerdings weniger räumlich kompakt ist, in üblicher Weise für bestimmte Strahlungseigenschaften (Kreuzpolarisation, Nebenkeulen, Gewinn, etc.) optimiert. Eine derartige Antenne ist in Fig. 1 gezeigt. Sie weist unter anderem einen Haupt- und einen Subreflektor, eine Infrarot(IR)-Optik und ein Radom auf.

Für die nachstehenden Erläuterungen zur Festlegung der Antennenkonturen, d.h. der Reflektorflächen, ist zu beachten, daß Reflektorflächen im allgemeinen Freiformflächen sind und nur näherungsweise als allgemeine Flächen zweiter Ordnung dargestellt werden können.

Im folgenden wird nun der Entwurf des erfindungsgemäßen bispektralen Fensters sowie einer erfindungsgemäßen Reflektorantenne mit bispektralem Fenster am Beispiel einer Offset-Doppelreflektorantenne erläutert.

Doppelreflektor-Konturentwurf

Zunächst wird auf den Doppelreflektorentwurf an sich eingegangen.

Bei gegebener rotationssymmetrischer Hauptzuführungsverteilung, einer gewünschten Aperturausleuchtung, einer elliptischen Aperturform und einigen mehr geometrischen Parametern kann eine Offset-Doppelreflektorantenne mit einem niedrigen Kreuzpolarisationspegel unter Verwendung eines numerischen Verfahrens, wie beispielsweise CARTA, das in "Numerical Synthesis of Dual Reflector Systems", Prof. Westcott, University of Southampton, beschrieben ist, entworfen werden. Der Startpunkt für eine Kontursynthese verwendet gewöhnlich die wohlbekannte MIZUGUTCH-Bedingung für konische Reflektorflächen, die in Y. Mizugutch: Offset dual reflector antenna, IEEE-Int. Sym., Amherst, Mass., 1976, offenbart ist. Die Aperturgröße ist 350mm $\cdot$ 225 mm, das Primärfeld ist eine $\cos^n(\theta)$-Funktion mit einem Randabfall von 15 dB bei einem Randwinkel von 28°. Es wurden eine Vielzahl von Simulationen durchgeführt, um eine sehr kompakte Antennenanordnung zu finden, die in eine Hemisphäre mit einem Radius von 2250 mm paßt. Das Ergebnis ist eine in Fig. 1 gezeigte Offset-GREGORY-Antenne.

Das Primärfeld wird angenähert durch

$$F_p = \cos^n(\theta); \qquad n \approx 14$$

Die gewünschte Amplitudenausleuchtung der elliptischen Apertur mit Halbachsen a,b ist durch eine Ein-Parameter-HANSEN-Verteilung gegeben, wobei der Parameter H für einen 25 dB Nebenkeulen-Pegel gewählt ist:

$$|f(\rho)| = I_0(H \cdot \pi \cdot \sqrt{1-\rho^2}); \qquad \rho = \sqrt{\left(\frac{x-x_0}{a}\right)^2 + \left(\frac{y}{b}\right)^2}; \qquad -a \leq x \leq a; -b \leq y \leq b;$$

$x_0$ bezeichnet den Ort des Aperturzentrums entlang der Antennenkoordinaten-x-Achse (Fig. 1). Sowohl Erreger- als auch Subreflektorachse sind im Hinblick auf die z-Achse geneigt, was obligatorisch ist, um die Kreuzpolarisation zu minimieren.

Außerdem müssen die folgenden zwei wichtigen Punkte berücksichtigt werden:

(1) Aufgrund von Astigmatismus gibt es zwei Phasenzentren zwischen Subreflektor und Hauptreflektor.
(2) GO-Synthese berücksichtigt Beugungseffekte nicht. PO-Analyse zeigt, daß eine geringe Änderung beim Subreflektor-Neigungswinkel die Kreuzpolarisation optimieren kann.

Hauptreflektornäherung

Als erstes wird nun die Hauptreflektornäherung beschrieben.

Es ist hierbei zu beachten, daß optische Oberflächen im allgemeinen auf einfache rotationssymmetrische Formen beschränkt sind. So ist der Zentralbereich der Hauptreflektorfläche innerhalb eines Radius von 45 mm über die Boresightachse mit der Methode der kleinsten Quadrate angenähert, wobei ein allgemeines Polynom verwendet wird, das die folgende Form mit einer maximalen Ordnung von 2 aufweist:

$$S(x,y,z) \equiv a_0 + a_1 x + a_2 (x^2 + y^2) + a_3 xz - z = 0$$

Diese Gleichung stellte eine um die y-Achse gedrehte und entlang der x- und z-Achse im Hinblick auf das Antennen-Koordinatensystem (x,y,z) verschobene rotationssymmetrische konische Oberfläche dar. Ein Abschnitt eines Hyperboloids stellte sich als die beste Lösung dar, die eine Abweichung entlang z um ungefähr 0,02 mm rms (root mean square = Effektivwert) (0,05 mm Spitze) oder bezogen auf die Wellenlänge $\lambda$/160 rms (root mean square = Effektivwert) (λ/64 Spitze) zeigt. Bei einer gewöhnlichen Reflektorantenne wäre eine derart geringe Abweichung unproblematisch. In unserem Fall ist der Fehler jedoch ein systematischer und in seiner Auswirkung schlecht durch einen Effektivwert (rms-Wert) darstellbar. Der sich ergebende Apertur-Phasenfehler aufgrund der Konturabweichung im zentralen Bereich des Hauptreflektors wird als $\Delta\psi_A(x,y)$ bezeichnet.

Infrarot(IR)-Fenster-Entwurf (Entwurf eines bispektralen Fensters)

Nun wird auf den Entwurf des Infrarot(IR)-Fensters, also des erfindungsgemäßen bispektralen Fensters genauer eingegangen.

An das bispektrale Fenster werden folgende Anforderungen gestellt: Es soll aus dielektrischem Material mit niedrigem Verlustfaktor und hoher Dielektrizitäts- bzw. Permittivitätszahl (DK) (ca. 8) bestehen, optimale Transmittivität für Infrarot(IR) so wie optimale Reflektivität für Millimeterwellen(RF) besitzen, seine Vorder- und Hinterkontur müssen rotationssymmetrische Flächen sein und es soll nur eine minimale Abweichung der Vorderkontur von der Reflektorkontur aufweisen, wobei als Vorderkontur die Reflektorseite definiert wird, auf die die Millimeterwellen(RF)-Strahlung einfällt.

Die Konturflächen des Sub- und Hauptreflektors sind im allgemeinen rechnerisch synthetisiert, um bei vorgegebenem Erregerfeld bestimmte Strahlungseigenschaften, wie Gewinn und Nebenkeulen der Antenne zu erhalten; es sind also Freiformflächen und können nicht als rotationssymmetrische Kegelschnittflächen definiert werden. Somit ist der zentrale Teil des Hauptreflektors nicht ohne weiteres durch eine rotationssymmetrische Fläche ersetzbar. Ferner ist eine die Reflektivität erhöhende metallische Beschichtung des bispektralen Fensters oder das Aufbringen einer frequenzselektiven Struktur aus Infrarot(IR)-optischen Gründen allgemein nicht zulässig.

Daher wird nun ein in Hauptstrahlrichtung gesehener kreisförmiger Teil des Hauptreflektors wird näherungsweise als allgemeine rotationssymmetrische Fläche zweiter Ordnung approximiert.

Dies ist in dem vom Infrarot(IR)-System benötigten, relativ kleiner Bereich des Hauptreflektors mit geringer Abweichung möglich.

Eine geeignete Beschreibung einer geformten oder asphärischen Oberfläche in einem optischen System ist in Form der in der Optik üblicherweise verwendeten sog. Asphärengleichung gegeben, wie sie aus Y.T. Lo, S.W. Lee: Antenna Handbook, Van Nostrand Reinhold Comp., New York, 1988, beschrieben ist:

$$z' = \frac{cr^2}{1+\sqrt{1+(1-K)c^2r^2}} + \sum_{i=1}^{N} b_i r^{2(i+1)}; \qquad r = \sqrt{x'^2 + y'^2};$$

wobei K der konische Koeffizient, r der von der Achse auf der Umdrehungsoberfläche gemessene Abstand ist, c die Krümmung der Oberfläche am Apex bzw. Scheitel steuert und b die Koeffizienten des Polynoms sind. Der erste Term stellt die Oberfläche mit der Form eines Hyperboloids (K<-1), eines Paraboloids (K=1), eines Ellipsoids (-1<K<0), einer Sphäre (K=0) oder eines Sphäroids (K>0) dar.

Im folgenden erfolgt eine Beschränkung nur auf quadratische Terme, so daß alle Koeffizienten b. weggelassen werden. Die Parameter K und c können einfach durch eine geeignete Transformation in Beziehung zu den allgemeinen Polynomparametern $a_i$ gesetzt werden.

Bezogen auf die Darstellung gemäß den Fig.en 2 und 3 ergibt sich somit vereinfacht aus der vorstehenden Asphärengleichung folgendes:

$$\zeta = \frac{c_s(\xi^2+\eta^2)}{1+\sqrt{1-(1+k_s)c_s^2(\xi^2+\eta^2)}}$$

Die Transformation in das Antennenkoordinatensystem erfolgt über die Transformationsmatrix **T**, die von der Translations- und Rotationsparametern abhängt:

$$\begin{pmatrix} x \\ y \\ z \end{pmatrix} = \mathbf{T} \times \begin{pmatrix} \xi \\ \eta \\ \varsigma \end{pmatrix}; \mathbf{T} = \mathbf{T}(\Delta x, \Delta z, \alpha_y)$$

Die beiden Koordinatensysteme und die Transformationsparameter sind in den Fig.en 2 und 3 dargestellt.

Zwei Flächen und die Eigenschaften des dielektrischen Materials (ZnS, Ge, Si) definieren die elektrische Leistung des Infrarot(IR)-Fensters: eine Vorderfläche, auf der die Subreflektorstrahlung einfällt, und eine Hinterfläche. Die Vorderfläche ist vollständig durch die Hauptreflektorfläche definiert. Die Hinterfläche ist erforderlich, um niedrige optische Infrarot(IR)Gesamtaberrationen zu erzeugen und sowohl eine maximale Millimeterwellen(RF)-Reflektivität und Infrarot(IR)-Transmittivität. Da die Infrarot(IR)-Wellenlänge verglichen mit der Millimeterwellen(RF)-Wellenlänge um einen Faktor $10^3$ kleiner ist, können irgendwelche Beschichtungen angelegt werden, um die Infrarot(IR)-Transmittivität auf einen ausreichenden Wert zu bringen. Im Prinzip gibt es zahlreiche Möglichkeiten, die Millimeterwellen(RF)-Reflektivität der Vorderfläche zu erhöhen, wie beispielsweise resonante Strukturen, metallische Drähte oder Gitter, geschichtete dielektrische Blätter, dünne leitfähige Schichten (Al, Zn, Ti, Au, AG) oder im allgemeinen sehr hohe dielektrische Konstanten. Unglücklicherweise passen alle diese nicht zu den optischen Infrarot(IR)-Erfordernissen. Die einzige anwendbare Lösung besteht darin, die Dicke des dielektrischen Kerns mit dem niedrigsten Verlust für eine konstruktive Interferenz zwischen reflektierten Strahlen von der Vorder- und der Hinterfläche zu tunen bzw. abzustimmen.

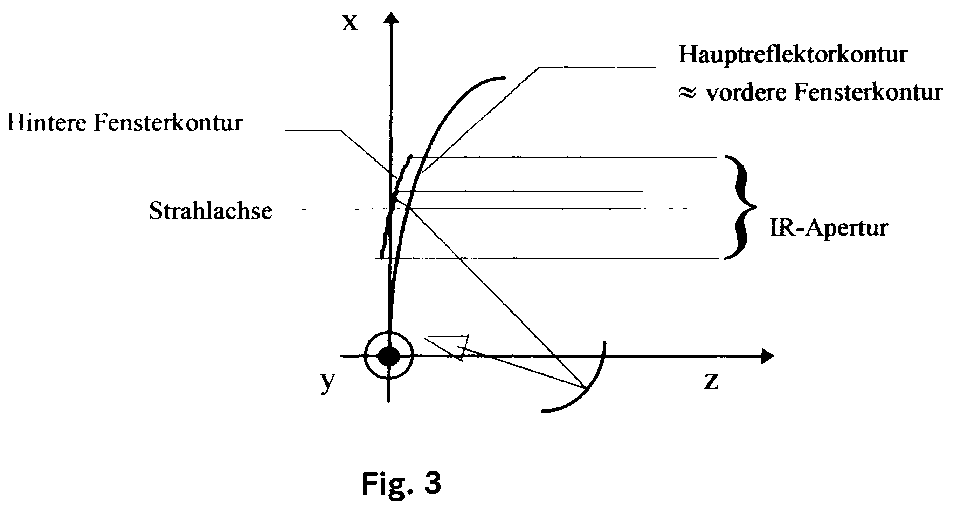

Die Vorderflächenparameter, konische Konstante $k_{sv}$ und paraxiale Krümmung $c_{sv}$ sowie die Kippung um die y-Achse ($\alpha_y$), die Translation entlang der z-Achse ($\Delta z$) und die Translation entlang der x-Achse ($\Delta x$) werden nun so bestimmt, daß die Abweichung der vorderen Fensterfläche von der Reflektorfläche in z-Richtung im Sinne einer Anpassung nach der Methode der kleinsten Quadrate bzw. "least square fit"-Anpassung minimal wird. Simulationsrechnungen haben gezeigt, daß die Restabweichung bezogen auf die Millimeterwellen(RF)-Wellenlänge sehr gering wird. Diese Abweichung ist in Fig. 3 übertrieben stark dargestellt. Die Hinterkontur wird nun auf die selbe Rotationsachse wie die Vorderkontur bezogen; die Hinterflächenparameter, konische Konstante $k_{sh}$ und Scheitelkrümmung $c_{sh}$ sowie axiale Verschiebung $s_a$ zur Vorderkontur entlang der $\zeta$-Achse werden mit Hilfe einer numerischen Optimierung so gewählt, daß die Reflektivität über der Apertur des bispektralen Fensters maximal und möglichst konstant wird. Die dazu notwendige Weglängenbedingung für eine konstruktive Interferenz wird aus dem geometrischoptischen Strahlengang zwischen Subreflektor und Hauptreflektor abgeleitet; sie ist daher eine ganz spezifische, nur für dieses Reflektorsystem gültige Bedingung. Im Prinzip ist die Fensterdicke d ein ungeradzahliges Vielfaches der Viertelwellenlänge im Dielektrikum; bei senkrechtem Einfall ist sie durch die bekannte Beziehung

$$d = n \cdot \frac{\lambda_0}{4\sqrt{\varepsilon}}; n=1,3,5,7,...$$

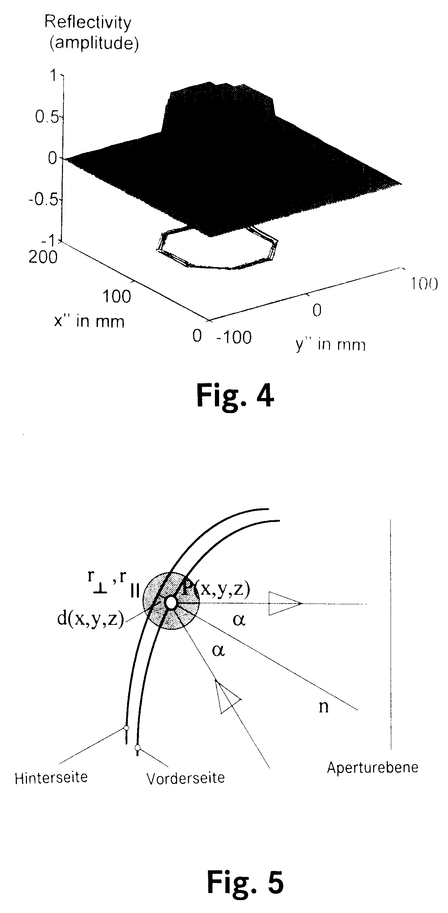

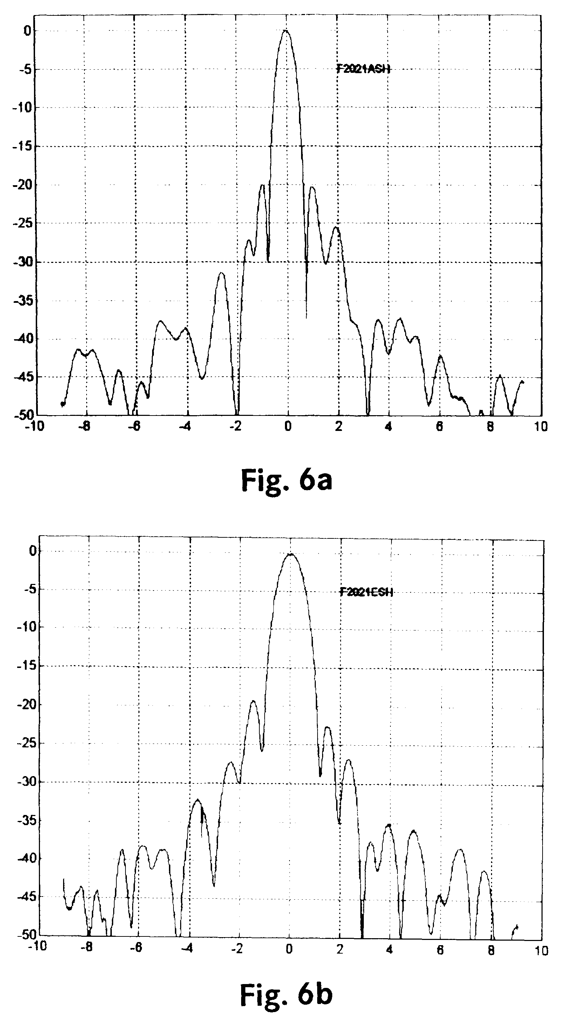

gegeben, wohingegen die Dicke im Fall von schrägem Einfall eine kompliziertere Funktion des Einfallswinkels und der Polarisation ist. Daher wirkt die Rückoberfläche als ein Millimeterwellen(RF)-aktives Element und ihre Parameter, Apex- bzw. Scheitel-Abstand, Apex- bzw. Scheitel-Krümmung und konische Konstante sind entworfen, um eine maximale oben flache Reflektivität über die Fensterapertur (ungefähr 70%) für beide Polarisationen zu erreichen, wie in Fig. 4 dargestellt. Die Komponenten der gestörten Aperturausleuchtung ausgedrückt durch die ideale Beleuchtung sind gegeben durch die Vektorbeziehung

$$\mathbf{f} = \mathbf{T}_W \cdot \mathbf{f}_0 \qquad \mathbf{T}_W = \frac{-1}{n_x^2 + n_y^2} \cdot \begin{pmatrix} r_n n_y^2 + r_p n_x^2 & n_x n_y \left( r_n - r_p \right) \\ n_x n_y \left( r_n - r_p \right) & r_n n_x^2 + r_p n_y^2 \end{pmatrix}$$

wobei $n_x$, $n_y$ die Normaleinheitsvektorkomponenten der Vorderfläche und $r_{||}$, $r_\perp$ den FRESNEL'schen Reflektionskoeffizienten für parallelen und normalen Einfall bezeichnen, wie in Fig. 5 gezeigt, die eine Infrarot(IR)-Fenster-Reflektion veranschaulicht. $T_W$ ist eine Funktion von sechs Parametern: des Einfallwinkels, der Apex- bzw. Scheitel-Krümmung und der konischen Koeffizienten für die Vorder- und Hinterfläche und des Abstands zwischen den Scheiteln.

Weil die Hinterkontur nach Millimeterwellen(RF)-Gesichtspunkten gewählt wird, ist sie für das Infrarot(IR)-System im allgemeinen nicht optimal. Dafür ist eine außerhalb des Reflektorsystems befindliche zusätzliche Infrarot(IR)-Korrekturoptik vorgesehen.

Radom-Entwurf

Als nächstes wird auf den Radom-Entwurf eingegangen.

Die gesamte Antenne wird von einem hemisphärischen, Einzelschicht-Radom konstanter Dicke bedeckt, wie aus Fig. 1 ersehen werden kann. Das dielektrische Material ist ZnS mit niedrigem Verlust ($\varepsilon$=8,35, tan$\delta$=0,0024), wie es für das Infrarot(IR)-Fenster verwendet ist und seine Dicke beträgt ungefähr 7 mm. Um die elektrischen Wirkungen zu berechnen, verwenden wir die Aperturtheorie und projizieren die Antennenapertur auf eine Ebene außerhalb des Radoms. Die Wechselwirkung von reflektierten Strahlen innerhalb des Radoms und eine Interferenz mit dem Aperturfeld wird vernachlässigt. Eine Simulation und Messungsergebnisse bestätigen die Gültigkeit dieser Näherung. An Punkten, an denen die achsparallelen Strahlen das Radom schneiden, wird lokal eine ebene dielektrische Schicht gegebener Dicke angenommen und Transmittivitätskoeffizienten ($t_\perp$, $t_\parallel$) werden unter Verwendung der FRESNEL'schen Formeln berechnet. Eine ähnliche Beziehung wie die vorstehend erwähnte gilt für die Komponenten der gestörten Aperturausleuchtung:

$$\mathbf{f} = \mathbf{T}_R \cdot \mathbf{f}_0 \qquad \mathbf{T}_R = \frac{1}{n_x^2 + n_y^2} \cdot \begin{pmatrix} t_n n_y^2 + t_p n_x^2 & n_x n_y\left(t_n - t_p\right) \\ n_x n_y\left(t_n - t_p\right) & t_n n_x^2 + t_p n_y^2 \end{pmatrix}$$

Eine Amplitudenstörung kann auf ein polarisationsabhängiges Minimum von 1,0 und 1,2 dB bei einer optimalen Dicke gebracht werden. Eine Phasenstörung ist jetzt vorhanden, sie ist im wesentlichen sphärisch und nahezu pola-risationsunabhängig. Wieder bezeichnen $n_x$, $n_y$ die Normal-Einheitsvektorkomponenten der Radomoberfläche und $t_\perp$, $t_\parallel$ die FRESNEL'schen Reflektionskoeffizienten für parallelen und normalen Einfall, aber nun ist $T_R$ nur eine Funktion des Einfallswinkels.

Radomphasenkompensation

Schließlich erfolgt noch eine Radomphasenkompensation.

Zur Kompensation für den Rest-Radomphasenfehler könnte man folgendes wählen:

(1) Synthetisieren von Konturen für eine Aperturbelegung mit definiertem Phasengang
(2) Nachträgliches Verformen der Hauptreflektorfläche (Näherung) oder
(3) Bewegen des Speisesystems in einer Weise, um einen nahezu sphärischen Phasenfehler derselben Art zu erzeugen (Näherung).

Da keine Software zur Durchführung von (1) zur Verfügung stand, wurde die Näherungslösung (3) gewählt. Eine Simulation zeigte, daß geeignetes Bewegen und Kippen sowohl von Zuführung als auch Subreflektor den Radom-Phasenfehler ausreichend beseitigt.

Simulation

Im folgenden wird noch auf Ergebnisse einer Simulation des Kompaktreflektorsystems eingegangen.

GRASP7 (= General Reflector Antenna Systems Programm, TICRA, Kopenhagen) wurde zur Analyse des Kompaktreflektorsystems verwendet. Als ein Zwischenergebnis der echten Aperturausleuchtung des Reflektorsystems wurde $f_0$ extrahiert und die Einflüsse von Infrarot(IR)-Fenster-Reflektivität, Infrarot(IR)-Fenster-Konturabweichung und Radomtransmittivität wurden berechnet und berücksichtigt. Dann ergibt die Aperturtheorie eine Gewinnfunktion und Strahlungsdiagramm

$$G(u,v) = \frac{4\pi}{\lambda^2} \cdot \frac{\left| \int_{y_1}^{y_2} \int_{x_1}^{x_2} \mathbf{T}_W \cdot \mathbf{T}_R \cdot \mathbf{f}_0 \cdot \exp\left( jk(ux+vy) + j\Delta\psi_A \right) dx\, dy \right|^2}{\int_{y_1}^{y_2} \int_{x_1}^{x_2} \left| \mathbf{f}_0 \right|^2 dx\, dy} ;$$

$$y_{1,2} = \pm b\sqrt{1-(x/a)^2} ; \qquad x_{1,2} = \pm a$$

$f_0$ ist die tatsächliche Aperturausleuchtung des gut fokussierten Doppelreflektorsystems im freien Raum. Die gestörte Aperturausleuchtung

$$\mathbf{f}_d = \mathbf{T}_R \cdot \mathbf{T}_W \cdot \mathbf{f}_0$$

zeigt einen nahezu sphärischen Phasenfehler, der hauptsächlich vom Radom stammt. Zur Kompensation dafür ergibt eine geeignete Vor-Fokussierung des Reflektorsystems eine nahezu konstante Aperturphase. Dies wurde durch einen schnell konvergierenden, iterativen Vorgang simuliert. Das erweiterte Apertur-Antennen-Programm (EAAP = Extended Aperture Antenna Program) ist eine vielseitig anwendbare MATLAB-basierte Software zur Analyse von Gewinn- und Strahlungsdiagrammen von elliptischen Aperturen mit beliebiger Aperturverteilung und Polarisation einschließlich Radom und Infrarot(IR)-Fenster-Effekten. Das Infrarot(IR)-Fenster kann irgendeine asphärische Form der Vorder- und [0042] Hinterfläche, beliebig verlustreiches Material, eine vielschichtige Struktur und auch eine leitfähige Beschichtung aufweisen. Der Radomaufbau ist auf eine sphärische Form, ein beliebig verlustbehaftetes Material und einen Einschicht-Entwurf mit einer einheitlichen Dicke beschränkt.

Ergebnisse

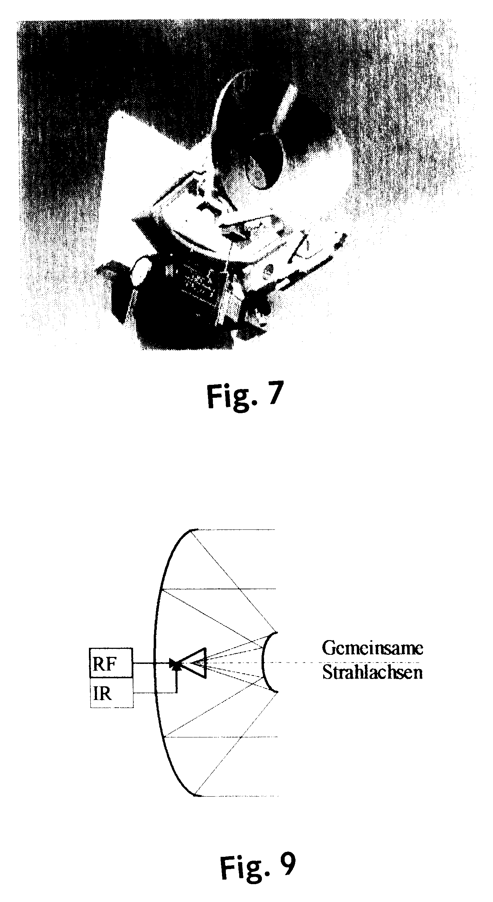

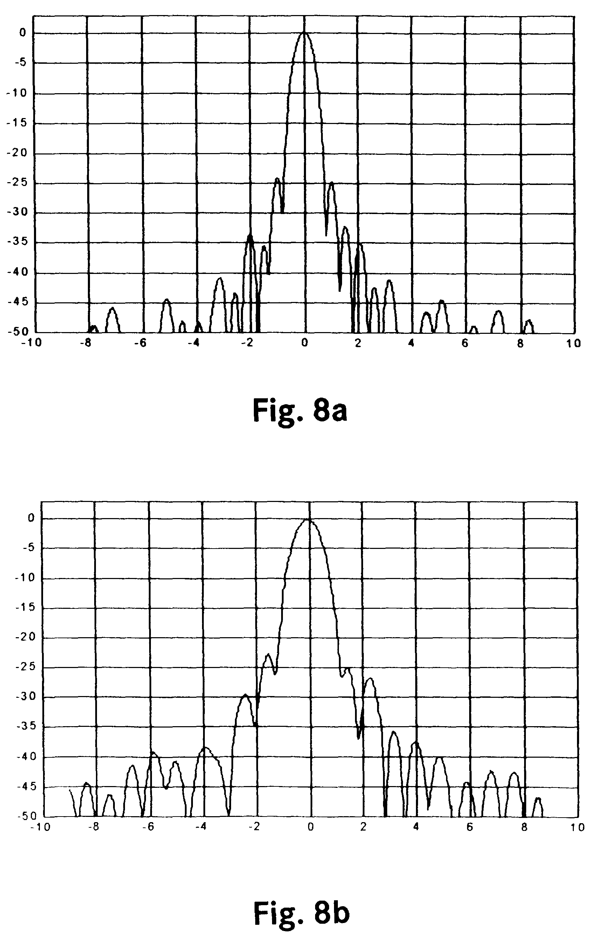

Die vorstehend genau beschriebene, erfindungsgemäße Offset-GREGORY-Doppelreflektorantenne wurde im Rahmen des Projektes AGBIII (Aufklärung und Bekämpfung von Gefechtsständen) im Frequenzbereich von 94 GHz entwickelt und untersucht. Die Simulationsrechnungen und die Meßergebnisse bestätigen die Wirksamkeit des erfindungsgemäßen bispektralen Fensters in einem Reflektor. Trotz der geringen Wellenlänge von ca. 3 mm gelingt es, die Abweichung der vorderen Fensterkontur von der Hauptreflektorkontur so gering zu halten, daß die Strahlungscharakteristik davon praktisch nicht beeinflußt wird. Die Reflektivität des Infrarot(IR)-Fensters ist über den Bereich der Apertur nahezu konstant und erreicht knapp 70%. Dieser Wert kann ohne Zusatzmaßnahmen, wie mehrschichtige Ausführung oder Aufbringen einer leitenden Schicht auf die Vorderfläche nicht weiter erhöht werden. Eine Degradation der Strahlungscharakteristik ist somit auf dieses physikalisch bedingte Minimum reduziert. Zum Vergleich zeigen die Fig.en 8a und 8b die Hauptschnitte der Strahlungscharakteristik für einen Vollreflektor und die Fig.en 6a und 6b die entsprechenden Diagrammschnitte für einen Reflektor mit bispektralem Fenster, wobei die Vorteile des bispektralen Fensters erkennbar werden. Fig. 7 zeigt weiterhin eine Gesamtansicht der realisierten Antenne auf einem Meßdrehstand

Es wurde somit erfindungsgemäß eine Offset-Doppelreflektorantenne mit einem bispektralen Fenster im zentralen Teil des Hauptreflektors entworfen, die alle optischen und elektrischen Erfordernisse zum Empfang von Infrarot(IR)- und Millimeterwellen(RF)-Strahlung erfüllt. Die Strahlungscharakteristiken in den Hauptschritten sind in den Fig.en 6a und 6b gezeigt. Der Radomverlust beträgt ungefähr 1 dB, die Infrarot(IR)-Reflektivität beträgt nahezu 70%. Eine Defokussierung des Speisesystems kompensiert den Rest-Radom-Phasenfehler. Zwei Phasenzentren erfordern eine Translation und Drehung des Speisesystems. Alle Messungen wurden bei Zirkularpolarisation durchgeführt. Die Kreuzpolarisation der Antenne wird im wesentlichen durch die Güte der Komponenten, wie Zirkulator und Polarisator, weniger durch das Radom und das Reflektorsystem, bestimmt.

**Patentansprüche**

1. Bispektrales Fenster für einen Reflektor für den Infrarot(IR)- und Millimeterwellen(RF)-Bereich, wobei

das bispektrale Fenster aus dielektrischem Material mit niedrigem Verlustfaktor und hoher Dielektrizitätszahl besteht,

rotationssymmetrischen, asphärische Vorder- und Hinterflächen aufweist, wobei
die Vorderfläche auf der Seite des Reflektors angeordnet ist, auf die die Millimeterwellen(RF)-Strahlung einfällt, und optimal an die Reflektorfläche angepaßt ist und
die Hinterfläche in Bezug auf optimale Millimeterwellen(RF)-Reflektivität ausgelegt ist.

2.  Bispektrales Fenster nach Anspruch 1, wobei

sich das bispektrale Fenster in einem in Hauptstrahlrichtung gesehener kreisförmigen Teil des Reflektors befindet, der näherungsweise als allgemeine rotationssymmetrische Fläche zweiter Ordnung approximierbar ist.

3.  Bispektrales Fenster nach Anspruch 1 oder 2, wobei

die Hinterfläche niedrige optische Infrarot(IR)-Gesamtaberrationen hervorruft und maximale Millimeterwellen(RF)-Reflektivität und maximale Infrarot(IR)-Transmittivität aufweist.

4.  Bispektrales Fenster nach einem der Ansprüche 1 bis 3, wobei

die Vorderfläche zur Erhöhung der Millimeterwellen(RF)-Reflektivität eine zusätzliche metallische Beschichtung aufweist.

5.  Bispektrales Fenster nach einem der Ansprüche 1 bis 4, wobei

das dielektrische Material zur Erhöhung der Millimeterwellen(RF)-Reflektivität mehrschichtig aufgebaut ist.

6.  Bispektrales Fenster nach einem der Ansprüche 1 bis 5, wobei

die Hinterfläche eine zusätzliche Beschichtung zur Erhöhung der Infrarot(IR)-Transmittivität aufweist.

7.  Bispektrales Fenster nach einem der Ansprüche 1 bis 6, wobei

die Dicke des dielektrischen Materials derart ist, daß der Verlust für eine konstruktive Interferenz zwischen reflektierten Strahlen von der Vorder- und der Hinterfläche möglichst niedrig ist.

8.  Bispektrales Fenster nach einem der Ansprüche 1 bis 7, wobei

das dielektrische Material eines von ZnS, Ge und Si ist.

9.  Reflektorantenne mit geformten Reflektor-Konturen und bispektralem Fenster nach einem der Ansprüche 1 bis 8.

10. Reflektorantenne nach Anspruch 9, wobei

die Reflektorantenne eine Offset-Doppelreflektorantenne mit geformten Reflektor-Konturen nach GREGORY- oder CASSEGRAIN-Prinzip ist,
das bispektrale Fenster im Hauptreflektor angeordnet ist und
die Strahlachsen des Infrarot(IR)- und Millimeterwellen(RF)-Systems koinzident sind.

11. Reflektorantenne nach Anspruch 9, wobei

die Reflektorantenne eine Offset-Doppelrelektorantenne mit geformten Reflektor-Konturen nach GREGORY- oder CASSEGRAIN-Prinzip ist,
das bispektrale Fenster im Hauptreflektor angeordnet ist und
die Strahlachsen des Infrarot(IR)- und Millimeterwellen(RF)-Systems parallel zueinander in x-Richtung verschoben sind.

12. Reflektorantenne nach Anspruch 9, wobei

die Reflektorantenne eine Offset-Einfachreflektorantenne mit geformter Reflektor-Kontur ist und
die Strahlachsen von Infrarot(IR)- und Millimeterwellen(RF)-System koinzident sind.

**13.** Reflektorantenne nach Anspruch 9, wobei

die Reflektorantenne eine Offset-Einfachreflektorantenne mit geformter Reflektor-Kontur ist und
die Strahlachsen von Infrarot(IR)- und Millimeterwellen(RF)-System parallel zueinander in x-Richtung verschoben sind.

**14.** Reflektorantenne nach Anspruch 9, wobei

die Reflektorantenne eine zentral gespeiste Einfachreflektorantenne mit geformter Reflektor-Kontur und bispektralem Fenster ist und
die Strahlachsen von Infrarot(IR)- und Mikrowellen(RF)-System beliebig parallel zueinander verschoben sind.

**15.** Reflektorantenne nach einem der Ansprüche 9 bis 14, mit

einem Einzelschicht-Radom mit sphärischer Form und mit konstanter Dicke.

**16.** Reflektorantenne nach Anspruch 15, wobei

das Einzelschicht-Radom aus dielektrischem Material mit niedrigem Verlust besteht.

**17.** Reflektorantenne nach Anspruch 16, wobei das dielektrische Material ZnS ist und eine Dicke von ungefähr 7 mm aufweist.

**18.** Reflektorantenne nach einem der Ansprüche 15 bis 17, wobei

eine Zuführung und ein Subreflektor beweg- und kippbar angeordnet sind, um einen Radom-Phasenfehler zu beseitigen.

**Fig. 1**

Fig. 2

EP 0 984 512 A1

Fig. 3

Reflectivity
(amplitude)

**Fig. 4**

**Fig. 5**

Fig. 6a

Fig. 6b

**Fig. 7**

Gemeinsame
Strahlachsen

**Fig. 9**

**Fig. 8a**

**Fig. 8b**

**Europäisches Patentamt**

## EUROPÄISCHER RECHERCHENBERICHT

Nummer der Anmeldung

EP 99 11 5189

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 40 10 242 A (RHEINMETALL GMBH ;TZN FORSCHUNG & ENTWICKLUNG (DE)) 2. Oktober 1991 (1991-10-02) * Spalte 2, Zeile 4 - Spalte 2, Zeile 60; Abbildungen 1-4 * | 1-18 | H01Q19/19 G01S13/86 |
| A | US 5 307 077 A (BRANIGAN JOHN T ET AL) 26. April 1994 (1994-04-26) * Spalte 4, Zeile 10 - Spalte 6, Zeile 4; Abbildungen 1,2 * | 1,9-14 | |
| A | US 4 355 313 A (HUBERT BERNARD) 19. Oktober 1982 (1982-10-19) * Spalte 4, Zeile 8 - Spalte 4, Zeile 35; Abbildung 6 * | 1,9 | |
| A | US 5 182 564 A (BURKETT FRED T ET AL) 26. Januar 1993 (1993-01-26) * Spalte 4, Zeile 7 - Spalte 5, Zeile 33; Abbildungen 1,2 * | 1,9-11, 15 | |
| A | US 5 327 149 A (KUFFER FERNAND B) 5. Juli 1994 (1994-07-05) * Spalte 4, Zeile 62 - Spalte 6, Zeile 33; Abbildungen 1A,1B * | 1,9 | RECHERCHIERTE SACHGEBIETE (Int.Cl.7) H01Q G01S |
| A | EP 0 583 557 A (DEUTSCHE AEROSPACE) 23. Februar 1994 (1994-02-23) * Spalte 1, Zeile 1 - Spalte 3, Zeile 3; Abbildung 1 * | 1,9 | |

Der vorliegende Recherchenbericht wurde für alle Patentansprüche erstellt

| Recherchenort | Abschlußdatum der Recherche | Prüfer |
|---|---|---|
| MÜNCHEN | 9. Dezember 1999 | Cannard, J-M |

## ANHANG ZUM EUROPÄISCHEN RECHERCHENBERICHT
## ÜBER DIE EUROPÄISCHE PATENTANMELDUNG NR.

EP 99 11 5189

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-12-1999

| Im Recherchenbericht angeführtes Patentdokument | Datum der Veröffentlichung | Mitglied(er) der Patentfamilie | Datum der Veröffentlichung |
|---|---|---|---|
| DE 4010242 A | 02-10-1991 | FR 2662309 A | 22-11-1991 |
| US 5307077 A | 26-04-1994 | KEINE | |
| US 4355313 A | 19-10-1982 | FR 2485275 A<br>CA 1146244 A<br>DE 3022765 A<br>GB 2053577 A,B<br>JP 1427419 C<br>JP 56004810 A<br>JP 62033615 B | 24-12-1981<br>10-05-1983<br>22-01-1981<br>04-02-1981<br>25-02-1988<br>19-01-1981<br>22-07-1987 |
| US 5182564 A | 26-01-1993 | KEINE | |
| US 5327149 A | 05-07-1994 | KEINE | |
| EP 0583557 A | 23-02-1994 | DE 4227032 C<br>DE 4331235 C | 30-09-1993<br>27-10-1994 |

EPO FORM P0461

Für nähere Einzelheiten zu diesem Anhang : siehe Amtsblatt des Europäischen Patentamts, Nr.12/82